## Europäisches Patentamt

## European Patent Office

## Office européen des brevets

(19)

(11) Publication number: **0 045 097**
A1

# EUROPEAN PATENT APPLICATION

(21) Application number: **81200627.8**

(22) Date of filing: **09.06.81**

(51) Int. Cl.³: **F 16 H 55/36, B 43 L 13/04**

(30) Priority: **12.06.80 GB 8019231**

(43) Date of publication of application: **03.02.82**
**Bulletin 82/5**

(84) Designated Contracting States: **AT BE CH DE FR GB IT LI LU NL SE**

(71) Applicant: **Garnett, David Morris, Manse Lane, Knaresborough W. Yorkshire HG5 8LS (GB)**

(72) Inventor: **Garnett, David Morris, Manse Lane, Knaresborough W. Yorkshire HG5 8LS (GB)**

(74) Representative: **Denmark, James, c/o Bailey Walsh & Co. 5 York Place, Leeds LS1 2SD Yorkshire (GB)**

(54) **Roller bearing arrangement, especially for drawing boards.**

(57) The invention provides a roller bearing arrangement including a drive shaft (24) which passes through the bearing (22), and is connected to the outer race (42) of the bearing (22) by means of a portion of the drive shaft (24) of non-circular section engaging in a portion (50) of a blanking or connecting panel (48) secured to the outer race (42) whereby the drive to the shaft (24) from the outer race (42) is through the panel (48).

The panel (48) and outer race (42) are preferably formed integrally in plastics material, the inner race (42) also is preferably of plastics material.

0045097

-1-

Improvements relating to roller bearings especially for drawing boards

This invention relates to roller bearings, and in particular concerns the utilisation of a roller bearing for providing a particular drive system.

The arrangement provides that there is drive from the outer race of a roller bearing coupled to a shaft which passes through the centre of the inner race of the outer bearing. Such arrangements are required in many applications in industry, and the invention therefore has wide application, although a specific application is described herein with reference to the drawings.

In accordance with the invention, a roller bearing drive arrangement comprises a roller bearing having inner and outer races, the outer race being drivingly connected to a drive shaft passing through the centre of the inner race, whereby the inner race can be held to form a mounting enabling the drive shaft and outer race to be rotated.

Preferably, the outer race is drivingly connected to a blanking plate means having a non-circular aperture in which is drivingly engaged a section of the drive shaft also of non-circular section.

Preferably, the outer race is of plastics material, and the blanking plate means is formed integrally with the outer race.

0045097

The inner race may also be of plastics material, and the rolling elements between the races may be balls or rollers.

A particularly suitable arrangement results when the drive shaft couples two bearings in similar fashion so that the outer races of the respective bearings are drivable with the shaft, whist the inner races are stationery and may be coupled by mounting means such as a tubular spindle through which the drive shaft passes, whereby the spindle may be used as a support means.

An arrangement as described is particularly suitable for providing a mounting system for the drive wires of a drawing board cursor suspension because the mounting spindle can be secured directly to the drawing board, and the outer races of the bearings may be provided with screw threaded grooves for receiving the drive wires of the system.

The drive connection between the blanking panel means and the shaft will be any suitable, such as a hexagonal aperture and a hexagonal spindle section.

This invention relates to roller bearings especially but not exclusively for a suspension and drive system for draughtsman's drawing board and seeks to provide a novel form of construction of such drawing boards.

Draughtsman's drawing boards, as is well known, include a cursor which is mounted to move up and down across the board to provide a straight edge by which the draughtsman can draw straight lines, and which serves as a datum for locating drawing instruments and set squares and the like.

The cursor is linked to wires at the sides of the board by which its movement is guided and controlled. The wires are trained round rollers at the top and bottom of the board.

This invention provides roller assemblies suitable for use in guiding the guide wires at the top of the board, said guide rollers having a threaded periphery for guiding turns of guide wires for the cursor, the said guide rollers comprising plastics material races relatively rotatable by having rows of balls therebetween, one of the races having said threaded periphery, and being coupled to a connecting shaft coupling both rollers.

The wires may be anchored to support rollers which run on the sides of the board. The wires are also trained round bottom rollers at the bottom ends of the board. The support and bottom rollers are also preferably provided with races relatively rotatable by having rows of balls between the races and the races preferably are formed in plastics material.

The said wires preferably have inertia weights attached thereto.

An embodiment of the invention will now be described, by way of example, with reference to the accompanying drawings, wherein:-

Fig. 1 is a perspective view of a draughtsman's drawing board according to the invention;

Fig. 2 is a sectional view of one of the guide rollers, the section being taken on line II-II of Fig. 1; and

Fig. 3 is a sectional elevation of one of the bottom rollers, the section being taken on line III-III of Fig. 1.

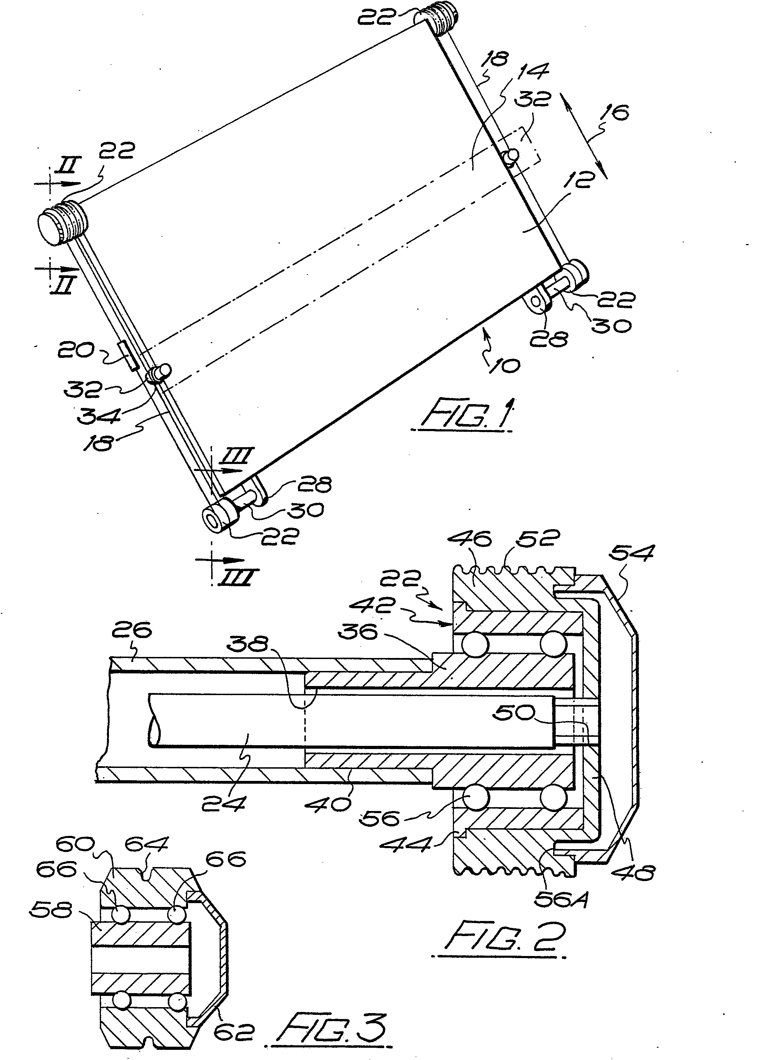

Referring to the drawings, in Fig. 1 there is shown a draughtsman's drawing board assembly 10 comprising a board 12 over which a cursor 14 moves in the manner indicated by arrow 16. The movement of the cursor 14, which is a narrow strip member, is controlled by means of guide wires 18, each of which defines an endless loop, said wires 18 being at each side of the board 12. Each wire is provided with a counterbalance weight 20, and is wrapped around a helical groove in the periphery of a guide roller 22 at the top of the board, and a single groove in a bottom guide roller 22 at the bottom of the board. Guide rollers 22 are coupled by means of common shaft 24 (Fig. 2) which passes through a square section tube 26 carried by the back of the board 12. Brackets 28 at the bottom of the board support stub shafts 30 on which rollers 22 are mounted. Finally, the cursor 14 is connected to side support rollers 32 which have rubber tyres 34 which run on the sides of the board 12 thereby effectively to guide the movement of the cursor 14.

If reference is made to Fig. 2, the form of upper guide roller assembly 22 is illustrated, and it will be seen that this assembly comprises an inner injection moulded plastic race 36 having a bore 38 through which the end of the coupling shaft 24 passes, the surrounding sleeve portion 40 of inner race 36 being of square cross section so as to fit in the end of tube 26. The outer race 42 is a cylindrical sleeve provided with an end stop flange 44, and the outer race 42, which is also injected moulded, is friction fitted and drivinglyreceived in a cup hub 46 having an end plate portion 48 having hexagonal hole 50 coaxial with the bore 38 and for receiving a hexagonal end of the coupling shaft 24. The wall portion of the cup hub 46 is provided with the threads 52 for receiving and guiding the wire 18 and finally a dust cap 54, suitably of a different colour is snapped into a recess 56 in the cup 46 as shown. All of the parts of the bearing so far

0045097

described are moulded in plastics material.

Between the races 44 and 36 are two rows of metal balls 56. These balls may be held circumferentially spaced by means of a suitable snap-in plastics material cages (not shown).

The bottom guide rollers are each constructed as shown in Fig. 3, and the construction is somewhat similar to the upper guide roller shown in Fig. 2, in that the inner race 58 and the outer race 60 are injection moulded and an end cap 62 is snapped into the outer race 60 as shown. The single groove 64 for receiving the wire 18 is also shown, and again two rows of balls 66 serve to ensure that the outer race 60 will run smoothly relative to the inner race 58 which is fast with the appropriate stub shaft 30.

The drive to shaft 24 is similarly coupled to the other roller bearing providing a positive and controlled driving of the cursor.

A novel construction of roller for the cursor guiding assembly for a drawing board is described. The arrangements heretofore used have not provided for the use of injection moulded plastics rollers and bearings of the construction set forth. These rollers can be modified for other applications.

Various modifications may be made without departing from the scope of the invention. Thus, the cap 46 and panel 48 may be integral with the outer race 42 and may be moulded in one piece. Also, the panel 48 may have a circular hole in which the drive shaft and (also circular) may be friction fitted. Furthermore, the blanking panel 48 may in fact be in the form of spokes supporting a hub in which the shaft end is received.

0045097

To assemble the two bearings 22 and the shaft 24 is very simple. The shaft ends are simply located in the bores 50.

0045097

CLAIMS:-

1. A roller bearing drive arrangement comprising a roller bearing having inner and outer races, the outer race being drivingly connected to a drive shaft, the drive shaft passing through the centre of the inner race, whereby the inner race can be held to form a mounting enabling the drive shaft and outer race to be rotated.

2. A roller bearing according to claim 1, wherein the outer race is drivingly connected to a blanking plate means having a non-circular aperture in which is drivingly engaged a section of the drive shaft also of non-circular section.

3. An arrangement according to claim 2, wherein the outer race is of plastics material, and the blanking plate means is formed integrally with the outer race.

4. An arrangement according to claim 1 or 2, wherein the inner race is of plastics material, and the rolling element between the races are balls or rollers.

5. An arrangement according to claim 1, 2, 3 or 4, wherein the drive shaft couples two bearings in similar fashion so that the outer races of the respective bearings are drivable with the shaft, whilst the inner races are stationery and may be coupled by mounting means such as a tubular spindle through which the drive shaft passes, whereby the spindle may be used as a support means.

6. An arrangement according to claim 5 wherein the connection between the outer races and the shaft is achieved by a hexagonal aperture and a hexagonal spindle section.

7. An arrangement according to claim 5, or claim 6, when dependent upon claim 5, wherein the roller assemblies serve to support the guide wires of wire suspension system or a cursor of a draughtsman's drawing board assembly, the said outer races being provided with threads for the guiding of the suspension wires.

0045097

FIG.1

FIG.2

FIG.3

European Patent
Office

**EUROPEAN SEARCH REPORT**

0045097

Application number

EP 81 20 0627

| | DOCUMENTS CONSIDERED TO BE RELEVANT | | CLASSIFICATION OF THE APPLICATION (Int. Cl. ) |
|---|---|---|---|
| Category | Citation of document with indication, where appropriate, of relevant passages | Relevant to claim | |
| X | <u>GB - A - 644 361</u> (VICTORIA)<br>* Pages 2,3; figures * | 1,2,5 | F 16 H 55/36<br>B 43 L 13/04 |
| X | <u>GB - A - 1 097 251</u> (STOTHERT)<br>* Page 2; figures * | 1,2,5 | |
| X | <u>US - A - 1 348 183</u> (RAYFIELD)<br>* Pages 1,2; figures * | 1,2,5 | |
| | <u>US - A - 3 475 982</u> (FRANK)<br>* Column 3; figure 6 * | 1,2,5 | TECHNICAL FIELDS SEARCHED (Int. Cl.³)<br><br>F 16 H 55/00<br>7/00<br>19/00<br>B 43 L 13/00<br>F 16 C 13/00 |
| | <u>GB - A - 1 002 073</u> (DARGUE)<br>* Pages 1,2; figures * | 5,7 | |
| | <u>US - A - 1 346 593</u> (DE CLERCQ)<br>* Page 1; figures * | 5,7 | |
| | <u>GB - A - 1 434 940</u> (BEARINGS)<br>* Page 2; figures * | 3,4 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-09-1981 | FLORES |

EPO Form 1503.1  06.78